(19) Europäisches Patentamt
European Patent Office
Office européen des brevets

(11) EP 4 241 907 A1

(12) EUROPEAN PATENT APPLICATION
published in accordance with Art. 153(4) EPC

(43) Date of publication:
13.09.2023 Bulletin 2023/37

(51) International Patent Classification (IPC):
B22F 10/80 (2021.01)     B22F 12/90 (2021.01)
B29C 64/386 (2017.01)     B29C 64/393 (2017.01)
B33Y 10/00 (2015.01)     B33Y 50/00 (2015.01)
B33Y 50/02 (2015.01)     C22C 19/05 (2006.01)
G01J 1/04 (2006.01)     G01N 21/71 (2006.01)
G01N 21/88 (2006.01)

(21) Application number: 21889204.0

(22) Date of filing: 02.11.2021

(52) Cooperative Patent Classification (CPC):
B22F 10/80; B22F 12/90; B29C 64/386;
B29C 64/393; B33Y 10/00; B33Y 50/00;
B33Y 50/02; C22C 19/05; G01J 1/04; G01N 21/71;
G01N 21/88; Y02P 10/25

(86) International application number:
PCT/JP2021/040429

(87) International publication number:
WO 2022/097651 (12.05.2022 Gazette 2022/19)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 04.11.2020 JP 2020184402

(71) Applicant: Proterial, Ltd.
Tokyo 135-0061 (JP)

(72) Inventors:
• KUWABARA, Kousuke
  Tokyo 108-8224 (JP)
• NIU, Jing
  Tokyo 108-8224 (JP)

(74) Representative: Becker, Eberhard
Becker Kurig & Partner
Patentanwälte mbB
Bavariastraße 7
80336 München (DE)

(54) METHOD FOR PREDICTING DEFECT OF ADDITIVE-MANUFACTURED PRODUCT AND METHOD FOR MANUFACTURING ADDITIVE-MANUFACTURED PRODUCT

(57) Provided is a method for predicting a defect of an additive-manufactured product manufactured by melting and solidifying metal powder, said method being characterized by having: a luminance data acquisition step for acquiring luminance data on light emitted from a molten pool formed when the metal power is melted and solidified; an evaluation data extraction step for extracting evaluation data from the luminance data; and an evaluation step for estimating the presence/absence of a defect of the additive-manufactured product by using the evaluation data, wherein the evaluation data includes a luminance average value and a luminance standard deviation.

FIG. 1

EP 4 241 907 A1

**Description**

[Technical Field]

The present invention relates to a method for predicting a defect of an additive-manufactured product, and a method for manufacturing an additive-manufactured product.

[Background Art]

A metal additive manufacturing method is used to obtain a 3-dimensional metal additive-manufactured product by supplying a heat source such as a laser beam, an electron beam, or the like to base powder on a substrate, melting and solidifying the base powder, forming a solidified layer, and repeating them. According to the metal additive manufacturing method, it is possible to obtain a 3-dimensional metal additive-manufactured product in a net shape or a near net shape.

A method for determining whether there is a defect in manufactured parts is, for example, detection of an internal defect using an X-ray CT scanning method as a non-destructive inspection means, or density measurement using an Archimedes method. The X-ray CT scanning method requires a long time for measurement and has a limited resolution for large parts. In addition, the Archimedes method is not able to detect individual defects, and has had low detection accuracy for a small amount of defects. Here, for example, according to Patent Literature 1, it is proposed to monitor an appearance property of an irradiated spot irradiated with a light beam, and obtain an additive-manufactured product with higher accuracy based on this.

[Citation List]

[Patent Literature]

[Patent Literature 1]
PCT International Publication No. 2018/043349

[Summary of Invention]

[Technical Problem]

However, Patent Literature 1 is limited to determining whether fume or sputter occurs by monitoring an appearance property.
Here, the present invention is directed to providing a method for predicting a defect of an additive-manufactured product and a method for manufacturing an additive-manufactured product that are capable of estimating the presence/absence of a defect of the additive-manufactured product.

[Solution to Problem]

A method for predicting a defect of an additive-manufactured product of the present invention is a method for predicting a defect of an additive-manufactured product manufactured by melting and solidifying metal powder, the method including: a luminance data acquisition step of acquiring luminance data of light emitted from a melt pool formed when the metal powder is melted and solidified; an evaluation data extraction step of extracting evaluation data from the luminance data; and an evaluation step of estimating the presence/absence of a defect of the additive-manufactured product using the evaluation data, the evaluation data including a luminance average value and a luminance standard deviation.
In addition, in the evaluation data extraction step, a coefficient of variation CV may be calculated from the luminance average value and the luminance standard deviation, and in the evaluation step, the presence/absence of a defect of the additive-manufactured product may be estimated using the coefficient of variation CV.
In addition, the present invention is a method for manufacturing an additive-manufactured product, the method including: an additive manufacturing process including: a powder supply step of supplying metal powder, a manufacturing step of irradiating the metal powder with a heat source, melting and solidifying the metal powder, and manufacturing the additive-manufactured product, and a luminance data acquisition step of acquiring luminance data of light emitted from a melt pool formed when the metal powder is melted; and an inspection process including an evaluation data extraction step of extracting evaluation data from the luminance data and an evaluation step of estimating the presence/absence of a defect of the additive-manufactured product using the evaluation data, the evaluation data including a luminance average value and a luminance standard deviation.

In addition, in the evaluation data extraction step, a coefficient of variation CV may be calculated from the luminance average value and the luminance standard deviation, and in the evaluation step, the presence/absence of the defect of the additive-manufactured product may be estimated using the coefficient of variation CV.

In addition, in the inspection process, a selection step of determining whether to continue the additive manufacturing process may be further provided.

[Advantageous Effects of Invention]

According to the present invention, it is possible to provide a method for predicting a defect of an additive-manufactured product and a method for manufacturing an additive-manufactured product that are capable of estimating the presence/absence of the defect of the additive-manufactured product.

[Brief Description of Drawings]

FIG. 1 is a flowchart showing a flow of a defect predicting method for estimating the presence/absence of a defect of an additive-manufactured product.
FIG. 2 is a view showing luminance fluctuation according to a geometry change of the additive-manufactured product.
FIG. 3 is a view showing the luminance fluctuation according to a powder bed position.
FIG. 4 is a view showing a method for setting a range of a coefficient of variation.
FIG. 5 is a schematic diagram showing a configuration of an additive manufacturing device of a powder bed method (SLM method) and an example of an additive manufacturing method.
FIG. 6 is a flowchart showing a flow of a method for manufacturing an additive-manufactured product.

[Description of Embodiments]

The present invention is a method for predicting a defect of an additive-manufactured product manufactured by melting and solidifying metal powder, the method for predicting a defect of the additive-manufactured product including a luminance data acquisition step of acquiring luminance data of light emitted from a melt pool formed when the metal powder is melted and solidified, an evaluation data extraction step of extracting evaluation data from the luminance data, and an evaluation step of estimating the presence/absence of a defect of the additive-manufactured product using the evaluation data, the evaluation data including a luminance average value and a luminance standard deviation.

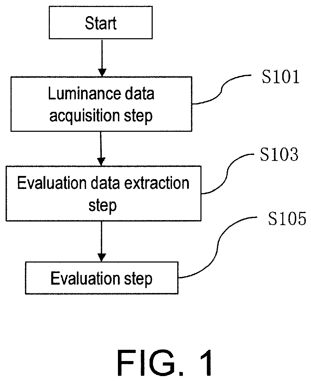

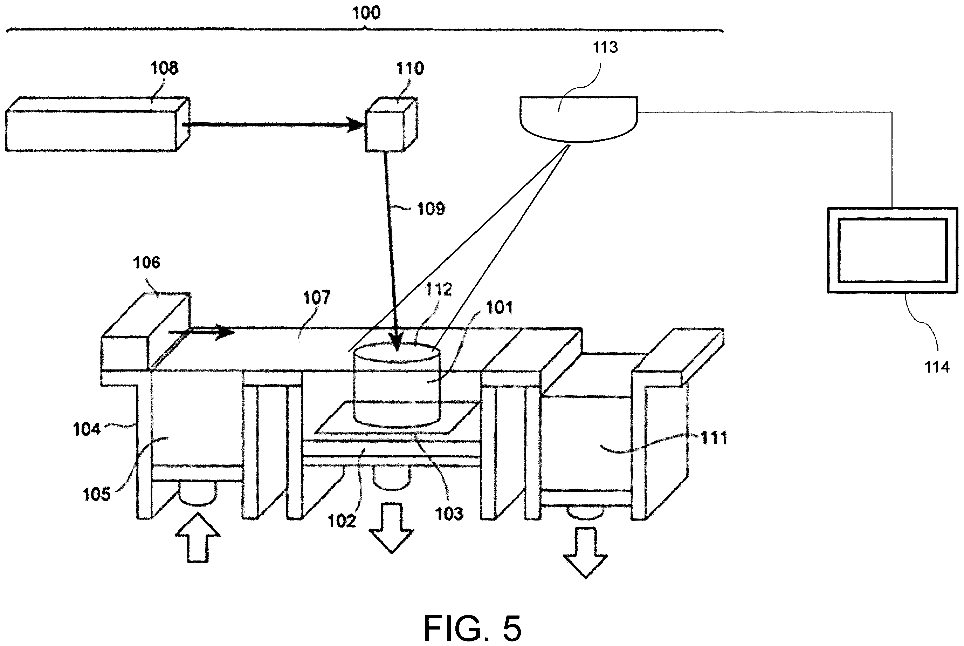

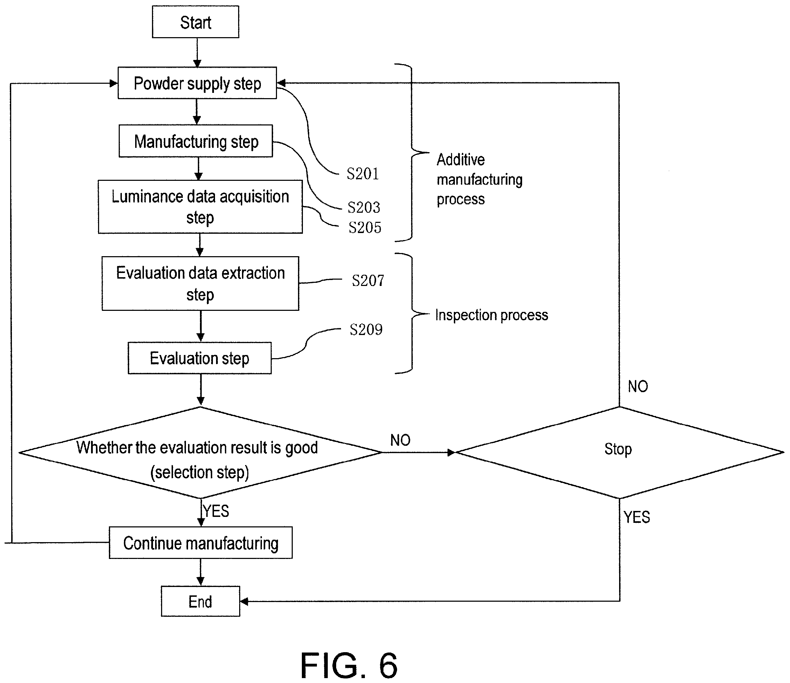

Hereinafter, an embodiment of the present invention will be described with reference to the accompanying drawings. First, a method for predicting a defect (a method for estimating a defect) of an additive-manufactured product will be described with reference to FIGs. 1 to 4, and then a method for manufacturing an additive-manufactured product will be described with reference to FIGs. 5 and 6.

<Method for predicting defect of additive-manufactured product>

[Luminance data acquisition step (S101)]

First, when a melt pool is formed by irradiating metal powder with a heat source or the like and melting the metal powder, luminance (luminance data) of light emitted from the melt ground is acquired. A laser beam or the like can be used as the heat source.

Light used in the embodiment can be, for example, reflection light when a laser beam is irradiated, light generated due to an increase in temperature of a melt pool or a heat affected zone, plasma light made by irradiating a laser beam to metal vapor generated by melting a metal and turning the metal into plasma, or the like. Preferably, it is better to detect luminance with high detection sensitivity. Specifically, it is better to detect light emitted from the melt pool and the vicinity thereof, in other words, light with a wavelength in a range of 600 nm or more and 1100 nm or less.

As a method for acquiring (detecting) luminance (luminance data) of light, for example, a sCMOS camera can be used. As for specifications of the sCMOS camera, for example, the number of pixels may be 50,000 pixels or more, and a photographing speed may be about 1 frame per second. More specifically, EOSTATE Exposure OT (manufactured by EOS Company) can be used. The EOSTATE Exposure OT photographs surroundings of the melt ground using the sCMOS camera, in which luminance generated from a manufacturing area irradiated with a laser from just above is provided obliquely above. While the sCMOS camera is installed obliquely above a manufacturing surface, it is possible to compensate for the distance and the angle through software and convert them to an observation image from above.

The luminance (OT luminance) acquired by the sCMOS camera may be luminance of a near infrared area during manufacturing. In order to acquire the luminance of the near infrared area, for example, a band pass filter may be provided on the sCMOS camera.

[Evaluation data extraction step (S103)]

Next, evaluation data is extracted from the luminance data obtained in the luminance data acquisition step (S 101). The evaluation data includes a luminance average value and a luminance standard deviation.

The luminance average value is an average value in which a unit of luminance is expressed with Gv, blue indicates zero, red gradually indicates a maximum value of $4.5 \times 10^4$, and luminance (color degree) is integrated every 100 msec (photographing speed: 100 msec) during manufacturing. That is, the luminance average value is an average value of pixel luminance values of a luminance image (an average value of luminance acquired in 1 pixel of the image). In addition, the luminance standard deviation indicates evaluation of variation of each pixel luminance of the image in each layer.

[Evaluation step (S105)]

Then, the presence/absence of a defect of an additive-manufactured product is estimated by comparing the luminance average value range and the luminance standard deviation range with the luminance average value and the standard deviation, which are set in advance. Specifically, as a method for estimating (evaluating) the presence/absence of a defect, the extracted luminance average value and luminance standard deviation may be compared with the luminance average value range and luminance standard deviation range, which are set in advance. For example, with respect to the luminance average value range and luminance standard deviation range set in advance, when the values of the extracted luminance average value and luminance standard deviation are within the ranges, it is possible to determine that there is no defect in the additive-manufactured product.

Further, in the specification, estimating the presence/absence of the defect of the additive-manufactured product may be simply referred to as evaluating the defect.

In the luminance average value range and the luminance standard deviation range, for example, luminance data of the additive-manufactured product having a defect or the additive-manufactured product having no defect is acquired in advance, the luminance average value and the luminance standard deviation are extracted from the luminance data, and the values may be set as a value (luminance average value range) obtained by subtracting a minimum value from a maximum value of the luminance average value and a value (luminance standard deviation range) obtained by subtracting a minimum value from a maximum value of the luminance standard deviation.

As described above, since sensitivity with respect to the locally generated luminance signal abnormality can be lowered using a value obtained by averaging the luminance (luminance average value) and variation of the luminance of each manufacturing point in each layer of the additive-manufactured product can be evaluated using the luminance standard deviation, it is also possible to detect a defect due to local luminance signal abnormality or a manufacturing error.

Furthermore, in the evaluation data extraction step (S103), a coefficient of variation CV is preferably calculated from the luminance average value and the luminance standard deviation, and the defect of the additive-manufactured product is preferably evaluated using the calculated coefficient of variation CV. The coefficient of variation CV is a coefficient calculated using two parameters of the luminance average value and the luminance standard deviation, specifically, a value calculated according to a formula for computation shown in Equation (1) (a dimensionless value obtained by dividing the luminance standard deviation by the luminance average value). Further, the additive manufacturing is generally performed by repeatedly melting and solidifying the metal powder on a solidified layer formed by melting and solidifying the metal powder, and the layer in the equation indicates a layer of an extent of one layer.

$$CV = \sigma_n / X_n ... \text{Equation (1)}$$

CV: coefficient of variation
$X_n$: luminance average value (Gv) of n layers
$\sigma_n$: luminance standard deviation (Gv) of n layers

As the method for estimating the defect using the coefficient of variation CV (an evaluation step using the coefficient of variation CV), the calculated coefficient of variation CV may be compared with the coefficient of variation CV range that is set in advance. For example, with respect to the coefficient of variation CV range set in advance, when the value of the calculated coefficient of variation CV is within the range, it is possible to determine that there is no defect in the additive-manufactured product.

As the method for setting the coefficient of variation CV range set in advance (the coefficient of variation CV range), for example, luminance data of the additive-manufactured product having the defect or having no defect may be acquired in advance, the coefficient of variation CV may be calculated from the luminance data, or the coefficient of variation CV range may be set based on the value of the coefficient of variation CV.

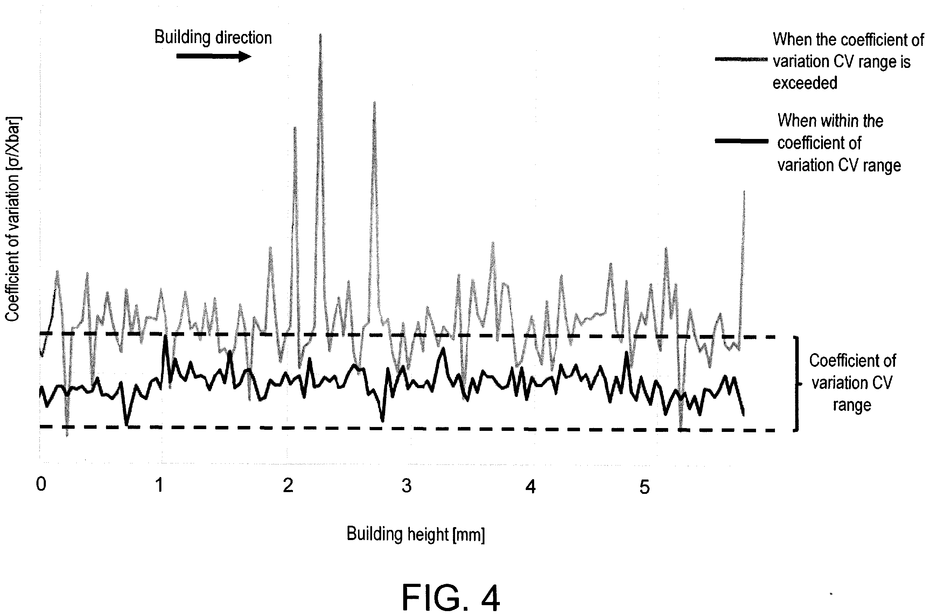

Specifically, with respect to the coefficient of variation CV range set in advance, as shown in FIG. 4, when the calculated coefficient of variation CV is within the range, it is possible to evaluate (estimate) that the additive-manufactured product has no defect. Meanwhile, when the coefficient of variation CV exceeds the range, it is possible to evaluate (estimate) that the additive-manufactured product has a defect. Further, the coefficient of variation CV range may be appropriately set for each shape of the additive-manufactured product and the manufacturing condition.

Even in an environment (condition) in which fluctuation of the luminance average value and the luminance standard deviation is likely to occur, it is preferable to use the coefficient of variation CV since it is possible to suppress a decrease in evaluation accuracy of the defect.

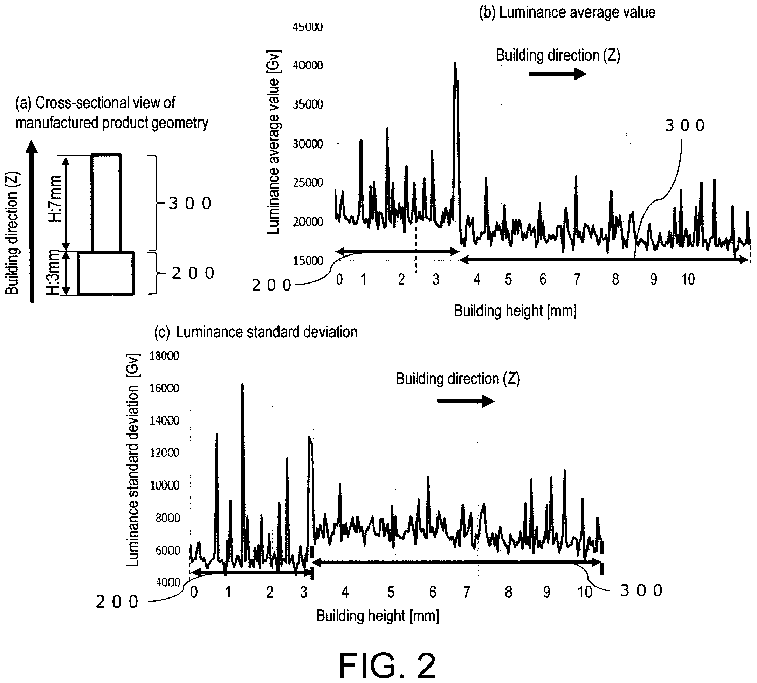

As the environment (condition) in which the luminance average value and the luminance standard deviation are fluctuated, a geometry of the additive-manufactured product is exemplified. This is because a change in the geometry of the additive-manufactured product causes a difference in the irradiation area of the laser beam, which in turn causes a difference in luminance data of light emitted by generating a difference in thermal diffusion speed according thereto. For example, (b) of FIG. 2 shows transition of a luminance average value acquired in a process of building of the additive-manufactured product having a region 1 (200) and a region 2 (300) as shown in (a) of FIG. 2, and (c) of FIG. 2 shows transition of the luminance standard deviation. As shown in (b) of FIG. 2 and (c) of FIG. 2, it can be seen that the luminance average value changes to a lower value when proceeding from the region 1 (200) to the region 2 (300), and the luminance standard deviation changes to a higher value when proceeding from the region 1 to the region 2.

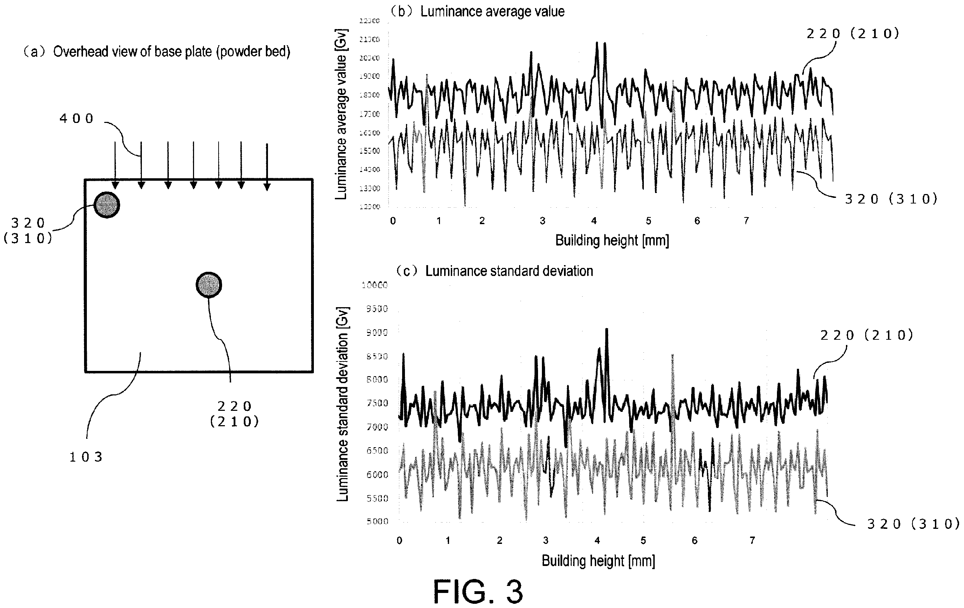

In addition, even when a manufacturing position (powder bed position) of the additive-manufactured product differs, the luminance average value and the luminance standard deviation may easily fluctuate, (a) of FIG. 3 shows a positional relationship between a powder bed position 1 (220) and a powder bed position 2 (320) when looking down on a base plate (103). In addition, (b) of FIG. 3 shows transition of luminance average values of a specimen 1 (210) built at the powder bed position 1 (220) and a specimen 2 (310) built at the powder bed position 2 (320), and (c) of FIG. 3 shows transition of luminance standard deviations of the specimen 1 (210) built at the powder bed position 1 (220) and the specimen 2 (310) built at the powder bed position 2 (320). Further, the specimen 1 (210) and the specimen 2 (310) have the same heat input (manufacturing) condition. As shown in (b) of FIG. 3 and (c) of FIG. 3, when the specimen 1 (210) is built at a position where a contact frequency with a flow gas (400) is high like the specimen 2 (310) built at the powder bed position 2 (320), the specimen 2 (310) cools more easily than the specimen 1 (210), and the luminance average value and the standard deviation numerical value make a transition at lower values when the specimen 2 (310) is manufactured. In addition, in addition to the cooling environment exemplified above, the luminance average value and the luminance standard deviation may fluctuate easily due to changes in manufacturing conditions.

As described above, even when the geometry of the additive-manufactured product changes or even when the manufacturing position or the manufacturing condition differs, the dimensionless coefficient of variation CV is more suitable for one-dimensional evaluation of the difference in environment (condition) as described above, and it is more preferable that a decrease in evaluation accuracy of the defect can be suppressed even when there is the difference in environment (condition).

<Method for manufacturing additive-manufactured product>

So far, while the method for predicting a defect of the additive-manufactured product has been described, according to the method for predicting a defect of the present invention, it is possible to manufacture the additive-manufactured product while evaluating the defect of the additive-manufactured product during additive manufacturing.

As the embodiment of the method for manufacturing the additive-manufactured product, the method has a additive manufacturing process including a powder supply step of supplying metal powder, a manufacturing step of irradiating the metal powder with a heat source and manufacturing the additive-manufactured product by melting and solidifying the metal powder, and a luminance data acquisition step of acquiring luminance data of light emitted from the melt pool formed when the metal powder is melted, and an inspection process including an evaluation data extraction step of extracting evaluation data from the luminance data and an evaluation step of estimating the presence/absence of the defect of the additive-manufactured product using the evaluation data, and the evaluation data includes a luminance average value and a luminance standard deviation. Hereinafter, each step will be described in detail with reference to FIG. 5 and FIG. 6.

FIG. 5 is a view schematically showing an additive manufacturing device 100 configured to manufacture the additive-manufactured product. The additive manufacturing device 100 includes a stage 102, a base plate 103, a powder supply container 104 configured to supply a metal powder 105 to the base plate 103, a recoater 106 configured to form a powder floor 107 on the base plate 103, a laser oscillator 108, a galvanometer mirror 110, a non-melted powder collecting container 111 configured to collect the metal powder 105 that was not melted, a sCMOS camera 113 configured to detect light emitted from a melt pool formed when the metal powder 105 is melted in a solidified layer 112 obtained by melting and solidifying the metal powder 105 with a laser beam 109 irradiated from the laser oscillator 108, and a luminance data acquisition device and an evaluation data extraction device 114 configured to convert the light detected by the sCMOS camera into luminance data and extract evaluation data. In addition, FIG. 6 shows a flow of the method for manufacturing the additive-manufactured product.

(Additive manufacturing process)

[Powder supply step: S201]

First, the stage 102 is lowered to an extent of a 1-layer thickness (for example, about 20 to 50 $\mu$m) of an additive-manufactured product 101, which will be manufactured. Next, the metal (raw material) powder 105 is supplied from the powder supply container 104 to the base plate 103 of the upper surface of the stage 102, and the metal powder 105 is flattened by the recoater 106 to form the powder floor 107 (powder layer).

[Manufacturing step: S203]

Next, the additive-manufactured product 101 is built in a desired geometry on the basis of geometry information of the additive-manufactured product 101, which will be manufactured, for example, 2-D slice data converted from 3D-CAD data. Specifically, a micro melt pool is formed by irradiating the metal powder 105 on the non-melted powder floor 107 spread over the base plate 103 with the heat source irradiated from the laser oscillator 108, for example, the laser beam 109 irradiated from the laser oscillator 108 through the galvanometer mirror 110. Then, the metal powder 105 is melted and solidified to form the solidified layer 112 having a 2-D slice geometry by scanning the laser beam 109 while irradiating it. Further, the non-melted metal powder 105 may be collected in the non-melted powder collecting container 111.

[Luminance data acquisition step: S205]

In the manufacturing step (S203), at the same time powder of an $(n+1)^{th}$ layer of the additive-manufactured product is melted and solidified, the luminance data upon melding of the powder to an $n^{th}$ layer of the solidified layer is acquired using the sCMOS camera 113, the luminance data acquisition device and the evaluation data extraction device 114. Here, as for the specifications of the sCMOS camera 113, as described above, for example, the number of pixels may be 4,000,000 pixels or more and a photographing speed may be about 10 frames per second. More specifically, the sCMOS camera 113, the luminance data acquisition device and the evaluation data extraction device 114 can use, for example, the EOSTATE Exposure OT (manufactured by EOS Company). The EOSTATE Exposure OT photographs surroundings of the melt ground with the sCMOS camera installed obliquely above the luminance generated in the manufacturing area irradiated with a laser from vertically above. While the sCMOS camera is installed obliquely above the manufacturing area, it is possible to compensate a distance and an angle on the software and convert it like an observation image from above. The luminance (OT luminance) acquired by the sCMOS camera may be a luminance of a near infrared area during manufacturing. In order to acquire the luminance of the near infrared area, for example, a band pass filter may be provided in the sCMOS camera.

When building to the extent of one layer is terminated, the stage 102 is lowered and new metal powder 105 is supplied on the solidified layer 112 to form a new powder floor 107. The newly formed powder floor 107 is irradiated with the laser beam 109 to be melted and solidified, thereby forming a newly solidified layer. Then, the desired additive-manufactured product 101 can be manufactured by repeating the powder supply step (S201) and the manufacturing step (S203) and forming the solidified layer 112. In addition, an inspection process may be executed after manufactured by repeating the powder supply step (S201) and the manufacturing step (S203), or may be repeated including, for example, an evaluation data extraction step (S207).

(Inspection process)

[Evaluation data extraction step: S207]

The evaluation data, i.e., the luminance average value and the luminance standard deviation are extracted (output) from the luminance data acquired by the luminance data acquisition device and the evaluation data extraction device 114. Here, it is preferable to further calculate the maximum value of the luminance average value and the value obtained by subtracting a minimum value from the maximum value of the luminance standard deviation.

[Evaluation step: S209]

Next, the defect is evaluated using the extracted luminance average value and luminance standard deviation, and if it is good, the steps (S201 to 207) are repeated until the additive-manufactured product with the desired geometry is obtained. As the evaluation of the defect, for example, the extracted luminance average value and luminance standard deviation may be compared with the luminance average value range and the luminance standard deviation range that are set in advance. For example, when the extracted luminance average value and luminance standard deviation are within the ranges of the luminance average value range and the luminance standard deviation range that are set in advance, it can be determined that there is no defect in the additive-manufactured product. In addition, when there is no defect in the additive-manufactured product to the $n^{th}$ layer of the solidified layer, the steps (S201 to S207) may be continued.

Further, since the luminance average value and the luminance standard deviation are changed according to a geometry and manufacturing conditions (laser power, a scanning speed, a scanning pitch (scanning interval), a layer thickness) of the additive-manufactured product, the luminance average value range and the luminance standard deviation range that are set in advance may be appropriately changed according to the desired additive-manufactured product.

Here, in the evaluation data extraction step (S207), it is preferable to calculate the coefficient of variation CV using the luminance average value and the luminance standard deviation.

Furthermore, the coefficient of variation CV range is preferably set in advance for each additive-manufactured product and for each solidified layer. It is possible to estimate the presence/absence of a defect of a fabricated part of the additive-manufactured product by comparing the coefficient of variation CV range set in advance with the calculated coefficient of variation CV. For example, when the calculated coefficient of variation CV is within the set range with respect to the coefficient of variation CV range set in advance, i.e., when it is estimated that there is no defect in the additive-manufactured product to the manufactured $n^{th}$ layer (evaluation is good), the additive manufacturing process and the inspection process (S201 to S207) may be continued.

In addition, even when the coefficient of variation CV exceeds the coefficient of variation range set in advance, if it is determined that the problem can be dealt with by the subsequent processing, the steps (S201 to S207) may be continued. Furthermore, the additive-manufactured product may be manufactured by temporarily stopping the additive manufacturing process, performing compensation or the like of the manufacturing condition or the slice data, restarting the additive manufacturing process by reflecting the manufacturing condition after the change or the slice data after compensation from the $(n+1)^{th}$ layer, and repeating the steps (S201 to S207). As described above, for example, when the coefficient of variation CV is within or outside the coefficient of variation range, a step of whether each step is continued can be referred to as a selection step, and the selection step may be further provided for the above-mentioned steps.

Accordingly, since the presence/absence of the defect can be estimated for each part, each layer of 1 batch (1 plate) of the additive manufacturing, i.e., in-process (real time), it is possible to manufacture the additive-manufactured product while inspecting the additive-manufactured product.

Upon completion of the above-mentioned step, in all the solidified layers (the melted and solidified layers) of the additive-manufactured product, the presence/absence of the defect generated in the additive-manufactured product can be estimated (evaluated) by recording and storing the luminance signal intensity from the melt pool as the luminance average value and the standard deviation upon melting and solidifying.

Since the additive-manufactured product 101 is built on the base plate 103 to be fabricated integrally and covered with the non-melted metal powder 105, upon taking out, after cooling the metal powder 105 and the additive-manufactured product 101, the non-melted metal powder 105 may be collected, and the additive-manufactured product 101 and the base plate 103 may be taken out of the powder additive manufacturing device 100. After that, the additive-manufactured product can be obtained by separating (cutting or the like) the additive-manufactured product 101 from the base plate 103.

Further, as the additive manufacturing method of the embodiment, powder bed method can be used. As the powder bed method, there is a method of spreading the metal powder to prepare the powder floor, and radiating a laser beam or an electron beam that is thermal energy to melt, solidify or sinter only the manufactured area. The method of melting and solidifying the manufacturing area of the powder floor using a laser beam as a heat source is referred to as selective laser melting (SLM), and a method of sintering the manufacturing area of the powder floor without melting it is referred to as selective laser sintering (SLS). In the method of using the laser beam as the heat source, in general, the additive manufacturing can be performed under an inert atmosphere such as nitrogen or the like. In addition, the powder floor method can use the electron beam as the heat source, and is referred to as selective electron beam melting (SEBM) or electron beam melting (EBM). In the method of using the electron beam as the heat source, the additive manufacturing can be performed under high vacuum.

Hereinabove, while the embodiment of the method for manufacturing the additive-manufactured product has been described, since the presence/absence of the defect of the additive-manufactured product can be estimated in-process and the additive-manufactured product can be manufactured by immediately applying a new additive manufacturing condition using the evaluation results, the effect of reducing a defect rate of the additive-manufactured product can also be expected. In addition, for example, evaluation of the defect by a non-destructive inspection X ray CT is eliminated, and reduction in manufacturing cost of the parts can also be expected.

Examples

Hereinafter, examples will be described.

The additive-manufactured product is manufactured using a powder additive manufacturing device (EOS M290 manufactured by EOS Company) and a monitoring instrument (EOSTATE Exposure OT (Optical Tomography)), and the presence/absence of the defect is estimated.

The metal powder used in the additive manufacturing is Ni-Cr-Mo-based alloy shown in Table 1.

The metal powder has an alloy composition (unit: mass%) of Table 1. As a method of fabricating the metal powder, raw materials of Ni, Cr, Mo and Ta, which are raw materials, were prepared to become the alloy composition of Table 1, the powder was granulated by a vacuum gas atomization method, and the granulated powder was sieved to fabricate the metal powder with a particle size of 10 µm to 53 µm and an average particle size (d50) of about 35 µm.

[Table 1]

| Composition of used metal powder (unit: mass%) | | | | |
|---|---|---|---|---|
| Element | Ni | Cr | Mo | Ta |
| Composition | Bal | 19 | 19 | 1.8 |

A rod-shaped additive-manufactured product (diameter of 3.5mm×height of 5mm, an axial direction is a building direction) was manufactured, and luminance data was acquired for each of melted and solidified layers according to a sequence of a flowchart of the method for manufacturing the additive-manufactured product as shown in FIG. 5. Further, as the additive manufacturing conditions, a layer thickness of 0.04 mm, a laser power of 300 W, a laser scanning speed of 960 mm/sec, and a scanning pitch of 0.11 mm were set.

The additive-manufactured products (test pieces of Nos. 1 to 4) were fabricated (manufactured) under the additive manufacturing conditions. The test pieces of Nos. 2 to 4 are additive-manufactured products whose luminance was confirmed to be higher than the luminance average value maximum value of the test piece of No.1. The luminance average value and the luminance standard deviation were extracted from the luminance data acquired when the test pieces of Nos. 1 to 4 were manufactured. Furthermore, the coefficient of variation CV was calculated from the extracted luminance average value and luminance standard deviation.

(Evaluation of defects by X ray CT scanning)

For the test pieces of Nos.1 to 4, internal defects were evaluated using the X ray CT scanning. In the X ray CT scanning, a micro focus X ray CT system (SHIMADZU, InspeXio SMX-225CT FPD HR) was used under measurement conditions with a measurement voltage of 220 V and a current of 70 µA. VGStudioMAX 3.2 (manufactured by Shimadzu Corporation) was used for image analysis. The resolution of the X-ray CT scanning was set to 0.018 mm.

Table 2 shows the luminance average values and the luminance standard deviations of the test pieces of Nos. 1 to 4, a maximum value of the luminance average value and the luminance standard deviation range (a value obtained by subtracting the minimum value from the maximum value of the luminance standard deviation), the coefficient of variation CV, and checking results of the defect by the X ray CT.

[Table 2]

| Specimen No. | Luminance average value maximum value (Gv) | Luminance standard deviation range (Gv) | Fluctuation coefficient CV range | Presence/absence of defect detection by X ray CT |
|---|---|---|---|---|
| 1 | 21900 | 2800 | 0.048 | Absence |
| 2 | 28700 | 6100 | 0.141 | Presence |
| 3 | 35600 | 13000 | 0.219 | Presence |
| 4 | 43600 | 15100 | 0.135 | Presence |

As shown in Table 2, in the test piece of No.1, in which the maximum value luminance standard deviation range of the luminance average value and the coefficient of variation CV are smallest, no defect was found in evaluation using the X ray CT. Meanwhile, in the test pieces of Nos. 2 to 4, both the luminance average value maximum value and the luminance standard deviation range are greater than those of the test piece of No.1, and defects were also found in the evaluation using the X ray CT.

Hereinabove, for example, in the manufacturing geometry and the manufacturing condition in the example, when the luminance average value and the luminance standard deviation obtained from the additive-manufactured product are less than the maximum value of the luminance average value and within the luminance standard deviation range of the test piece of No. 2, the evaluation can be performed when there is no defect in the additive-manufactured product. In addition, like the case in which the coefficient of variation CV is used, when the calculated coefficient of variation CV is within the coefficient of variation CV range of the test piece of No. 2, the evaluation can be performed when there is no defect in the additive-manufactured product.

Further, the above-mentioned embodiment or example is described to assist understanding of the present invention, and the present invention is not limited only to the specific configuration described above.

[Reference Signs List]

100: Additive manufacturing device
101: Additive-manufactured product
102: Stage
103: Base plate
104: Powder supply container
105: Metal powder
106: Recoater
107: Powder floor (powder layer)
108: Laser oscillator
109: Laser beam
110: Galvanometer mirror
111: Non-melted powder collecting container
112: 2-D slice-shaped solidified layer
113: sCMOS camera
114: Luminance data acquisition device and evaluation data extraction device
200: Region 1
210: Specimen 1
220: Powder floor position 1
300: Region 2
310: Specimen 2
320: Powder floor position 2
400: Flow gas

**Claims**

1. A method for predicting a defect of an additive-manufactured product manufactured by melting and solidifying metal powder, the method comprising:

   a luminance data acquisition step of acquiring luminance data of light emitted from a melt pool formed when the metal powder is melted and solidified;
   an evaluation data extraction step of extracting evaluation data from the luminance data; and
   an evaluation step of estimating the presence/absence of a defect of the additive-manufactured product using the evaluation data,
   wherein the evaluation data includes a luminance average value and a luminance standard deviation.

2. The method for predicting a defect of an additive-manufactured product according to claim 1, wherein, in the evaluation data extraction step,

a coefficient of variation CV is calculated from the luminance average value and the luminance standard deviation, and

in the evaluation step,

the presence/absence of a defect of the additive-manufactured product is estimated using the coefficient of variation CV.

3. A method for manufacturing an additive-manufactured product, the method comprising:

an additive manufacturing process including: a powder supply step of supplying metal powder, a manufacturing step of irradiating metal powder with a heat source, melting and solidifying the metal powder, and manufacturing the additive-manufactured product, and a luminance data acquisition step of acquiring luminance data of light emitted from a melt pool formed when the metal powder is melted; and

an inspection process including an evaluation data extraction step of extracting evaluation data from the luminance data and an evaluation step of estimating the presence/absence of a defect of the additive-manufactured product using the evaluation data,

wherein the evaluation data includes a luminance average value and a luminance standard deviation.

4. The method for manufacturing an additive-manufactured product according to claim 3, wherein, in the evaluation data extraction step,

a coefficient of variation CV is calculated from the luminance average value and the luminance standard deviation, and

in the evaluation step,

the presence/absence of the defect of the additive-manufactured product is estimated using coefficient of variation CV

5. The method for manufacturing an additive-manufactured product according to claim 3 or 4, further comprising, in the inspection process, a selection step of determining whether to continue the additive manufacturing process.

FIG. 1

(a) Cross-sectional view of
manufactured product geometry

(b) Luminance average value

(c) Luminance standard deviation

FIG. 2

EP 4 241 907 A1

(a) Overhead view of base plate (powder bed)

400

320
(310)

220
(210)

103

(b) Luminance average value

220 (210)

320 (310)

Building height [mm]

(c) Luminance standard deviation

220 (210)

320 (310)

Building height [mm]

FIG. 3

FIG. 4

EP 4 241 907 A1

FIG. 5

EP 4 241 907 A1

FIG. 6

## INTERNATIONAL SEARCH REPORT

| International application No. |
|---|
| **PCT/JP2021/040429** |

**A. CLASSIFICATION OF SUBJECT MATTER**

*B22F 10/80*(2021.01)i; *B22F 12/90*(2021.01)i; *B29C 64/386*(2017.01)i; *B29C 64/393*(2017.01)i; *B33Y 10/00*(2015.01)i; *B33Y 50/00*(2015.01)i; *B33Y 50/02*(2015.01)i; *C22C 19/05*(2006.01)i; *G01J 1/04*(2006.01)i; *G01N 21/71*(2006.01)i; *G01N 21/88*(2006.01)i

FI: B22F10/80; B22F12/90; B33Y10/00; B33Y50/00; B33Y50/02; B29C64/386; B29C64/393; G01N21/88 Z; G01N21/71; G01J1/04 J; G01J1/04 L; C22C19/05 Z

According to International Patent Classification (IPC) or to both national classification and IPC

**B. FIELDS SEARCHED**

Minimum documentation searched (classification system followed by classification symbols)

B22F10/80; B22F12/90; B29C64/386; B29C64/393; B33Y10/00; B33Y50/00; B33Y50/02; C22C19/05; G01J1/04; G01N21/71; G01N21/88

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2018/204981 A1 (MONASH UNIVERSITY) 15 November 2018 (2018-11-15) paragraph [0051] | 1-5 |
| Y | JP 2013-127415 A (KAJIMA CORP.) 27 June 2013 (2013-06-27) claims, paragraphs [0008], [0009], fig. 7, 8 | 1-5 |
| Y | JP 2002-228594 A (JAPAN VILENE COMPANY, LTD.) 14 August 2002 (2002-08-14) claims 6, 14, paragraphs [0004], [0005] | 1-5 |
| A | WO 2019/097222 A1 (LPW TECHNOLOGY LTD.) 23 May 2019 (2019-05-23) entire text, all drawings | 1-5 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **22 November 2021** | **07 December 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2021/040429**

| Patent document cited in search report | | | Publication date (day/month/year) | Patent family member(s) | | | Publication date (day/month/year) |
|---|---|---|---|---|---|---|---|
| WO | 2018/204981 | A1 | 15 November 2018 | JP paragraph [0051] | 2020-519762 | A | |
| JP | 2013-127415 | A | 27 June 2013 | (Family: none) | | | |
| JP | 2002-228594 | A | 14 August 2002 | (Family: none) | | | |
| WO | 2019/097222 | A1 | 23 May 2019 | JP entire text, all drawings | 2021-510226 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018043349 A